# EUROPEAN PATENT APPLICATION

(11) **EP 4 394 194 A1**
(43) Date of publication of application: **03.07.2024**
(21) Application number: 21966764.9
(22) Date of filing: 09.12.2021
(51) Int. Cl.: F16B 37/14, B01L 3/00

(54) **SEALING DEVICE AND SEALING SYSTEM**

(71) Applicant: BGI Shenzhen, Shenzhen, Guangdong 518083 (CN)
(72) Inventor: ZHAO, Zhentao, Shenzhen, Guangdong 518083 (CN); ZHANG, Yuning, Shenzhen, Guangdong 518083 (CN); LI, Yuxiang, Shenzhen, Guangdong 518083 (CN); YUN, Quanxin, Shenzhen, Guangdong 518083 (CN); DONG, Yuliang, Shenzhen, Guangdong 518083 (CN); ZHANG, Wenwei, Shenzhen, Guangdong 518083 (CN); XU, Xun, Shenzhen, Guangdong 518083 (CN)
(74) Representative: Rentsch Partner AG
(86) International application number: PCT/CN2021/136844
(87) International publication number: WO 2023/102842

(57) **Abstract**

This invention provides a sealing device and a sealing system, which belongs to the field of machinery, the sealing device provided by this invention comprises an inner core and at least two elastic components spaced apart on a side wall of the inner core; an end of the inner core is provided with a sealing component. The sealing system provided by this invention comprises a sealing device, a sealed piece and a position limiting device that allows the sealing device to be inserted or pulled out. The sealing component provided by this invention is easy to install and disassemble, can be employed to block the opening of the component to be sealed, and the arrangement of the elastic components can prevent the sealing device from being detached from the component to be sealed to a certain extent, the sealing performance is good, it is not easy to detach.

## Description

### TECHNICAL FIELD

This invention relates to the field of machinery, and in particular to a sealing device and a sealing system.

### BACKGROUND

Sealing is a measure to prevent fluid or solid particles from leaking from adjacent joint surfaces and to prevent external impurities, such as dust and moisture, etc., from intruding into the interior of the machinery equipment. In medical or biological experiments, in order to avoid the volatilization of certain medicinal liquids or the escape of gas, it is usually necessary to seal some specific liquid or gas storage devices in time.

In the prior art, rubber plugs or glass plugs are mostly used as temporary sealing means, however, whether rubber plugs or glass plugs are used, there is a problem of inconvenience in disassembly. In order to ensure the sealing performance, it is usually necessary to plug the plugs more tightly, in which case, the plugs are inconvenient to remove, and frequent operations will bring a relatively high impact on people's hands, especially in the field of microfluid, it is often necessary to temporarily seal the liquid injection port or liquid discharge port of a microfluidic device, and the aperture diameter of the liquid injection port or liquid discharge port is very small, making it more inconvenient to use common sealing plugs, therefore, a temporary sealing device that is convenient for installation and disassembly is particularly important.

In view of these, this invention is proposed.

### SUMMARY

This invention provides a sealing device and a sealing system, so as to solve the problem in the prior art of the lack of a temporary sealing device which is convenient for installation and disassembly.

In order to solve the above problems, this invention adopts the following solutions:
a sealing device, which comprises an inner core and at least two elastic components spaced apart on a side wall of the inner core;
the elastic components can be fully or partially elastically deformed in a direction toward the inner core;
an end of the inner core is provided with a sealing component.

The sealing device in this solution comprises an inner core and at least two elastic components spaced apart on the side wall of the inner core, after the sealing device is inserted into the component to be sealed (such as a microfluidic device), the gap between the sealing device and the component to be sealed can be smoothly discharged from the gap between the two elastic components, preventing the gas from entering into a liquid channel inside the component to be sealed. One end of the inner core is provided with a sealing component, after the sealing device is inserted into the component to be sealed, the sealing component can block the opening of the component to be sealed. Since the elastic components can be fully or partially elastically deformed in a direction toward the inner core, when the sealing device is inserted into a cavity structure, whose size is smaller than the outer contour size of the sealing device, the elastic components can be deformed, and the elastic components and the inner wall of the cavity structure are squeezed against each other, which forms a large static friction force, thereby effectively preventing the sealing device from being slipped out of the cavity structure, i.e., preventing the sealing component from being detached from the opening, ensuring the sealing effect.

In a further preferred solution, the side wall of the inner core is symmetrically provided with at least one pair of elastic components. The symmetrically arranged elastic components can abut against the inner wall of the cavity structure into which it is inserted as symmetrically as possible during elastic recovery, thereby making the connection between the sealing device and the component to be sealed tighter.

In a further preferred solution, the side wall of the inner core is also provided with at least one pair of fixing components. The fixing components do not undergo deformation during use, and they mainly serve to provide a certain support and balance and to protect the structure of the sealing device when the elastic components are squeezed.

In a further preferred solution, each pair of the fixing components is arranged coplanarly, and each pair of the elastic components is arranged coplanarly. Each pair of the fixing components and each pair of the elastic components both are arranged coplanarly respectively, thereby not only ensuring the stability and aesthetics of the overall structure of the sealing component, but also making the operation more convenient.

In a further preferred solution, the elastic component comprises a rigid piece and an elastic strip; one side of the rigid piece is connected with the side wall of the inner core, and the other side is connected to the elastic strip. The elastic strip can abut against the inner wall of the cavity structure into which it is inserted and can be elastically deformed, thereby increasing the static friction force between the elastic strip and the inner wall of the cavity structure, making the connection between the sealing device and the component to be sealed tighter.

In a further preferred solution, the elastic component at least comprises a connecting piece and a cantilever piece, one end of the connecting piece is provided on the side wall of the inner core, and the other end is provided with the cantilever piece, and there is a gap between the cantilever piece and the inner core;
wherein the cantilever piece and/or the connecting piece can be elastically deformed in a direction toward the inner core.

In this solution, the sealing device comprises an inner core and elastic components, the elastic component at least comprises a connecting piece and a cantilever piece, one end of the connecting piece is connected with the side wall of the inner core, and the other end is connected with the cantilever piece, there is a gap between the cantilever piece and the inner core; the cantilever piece or the connecting piece (or both at the same time) can be elastically deformed under the action of external force, that is, the cantilever piece can be deflected in a direction toward the gap under the action of the external force, when the sealing device is inserted into a cavity structure, which is located around the opening portion and whose size is smaller than the outer contour size of the sealing device, the sealing component can block the opening portion of the component to be sealed (such as a microfluidic device), and the cantilever piece or the connecting piece can be elastically deformed as a result of being squeezed by the inner wall of the cavity structure, the cantilever member is deflected in a direction toward the gap. At the same time, the outer wall of the cantilever piece exerts a reaction force on the inner wall of the cavity structure, thereby increasing the friction force between the cantilever piece and the cavity structure, so that the sealing device seals the opening portion more firmly and the sealing device is not easy to detach.

When using the sealing device in this solution, it is only necessary to hold the handle and directly insert the cantilever piece into the cavity structure, and then release the hand when the sealing device has blocked the opening portion of the component to be sealed (such as a microfluidic device); when disassembling the sealing device in this solution, it is sufficient to directly pull out the sealing device. The sealing device is easy to operate and is not easy to detach, has good sealing performance and strong practicality.

In a further preferred solution, in directions perpendicular to the inner core, a length size of the connecting piece is greater than a length size of the fixing component. When in use, the connecting piece needs to be compressed so that it can be smoothly inserted into the cavity structure of the component to be sealed, since the fixing component cannot be deformed, so its size should be smaller than that of the connecting piece, so as to ensure that the fixing component can be inserted into the cavity structure of the component to be sealed without deformation as much as possible.

In a further preferred solution, the pair of connecting pieces corresponding to the elastic components are arranged asymmetrically about the inner core. The connecting pieces are connected to the side wall of the inner core at different heights, this arrangement can meet the needs of components to be sealed with different depths, and provides better sealing performance.

In a further preferred solution, in a non-stressed state, the cantilever piece and the inner core are arranged in parallel. The cantilever piece and the inner core are arranged in parallel, thereby not only facilitating vertically inserting into the component to be sealed, but also facilitating pullout.

In a further preferred solution, the cantilever piece extends toward the side where the sealing component is located. The extended end of the cantilever piece is directly inserted into the interior of the component to be sealed when in use, which not only facilitates insertion, but also facilitates extending the service life of the cantilever piece.

In a further preferred solution, the connecting piece is fixedly connected with the side wall of the inner core, the cantilever piece and the connecting piece are integrally provided, and the cantilever piece can be elastically deformed in a direction toward the inner core. The fixed connection between the connecting piece and the side wall of the inner core and the integrated arrangement of the cantilever piece and the connecting piece mainly ensure the stability of the structural connection, when in use, the connecting piece is not deformed, and a stable sealing effect can be achieved only by the deformation of the cantilever piece.

In a further preferred solution, the connecting piece is fixedly connected with the side wall of the inner core, the cantilever piece and the connecting piece are integrally provided, and the connecting piece can be elastically deformed in a direction toward the inner core. When in use, the cantilever piece is not deformed, the cantilever piece connected to the outer side of the connecting piece moves in a direction toward the gap by the compression of the connecting piece, then the cantilever piece is inserted into the component to be sealed, after the pressure is released, the cantilever piece can squeeze the side wall of the component to be sealed under the elastic force of the connecting piece, thereby achieving a tight sealing effect.

In a further preferred solution, the connecting piece is fixedly connected with the side wall of the inner core, the cantilever piece and the connecting piece are integrally provided, and the connecting piece and the cantilever piece can be elastically deformed in a direction toward the inner core simultaneously. A tight sealing effect is achieved based on the joint action of the connecting piece and the cantilever piece

In a further preferred solution, the cantilever piece is made of elastic material; and/or the connecting piece is made of elastic material. In this solution, at least one of the cantilever piece and the connecting piece is made of elastic material, since there are many elastic materials in the prior art, such as rubber, etc., and the output is large, in addition, elastic deformation is achieved due to their own properties, it is easy to operate and the cost is low.

In a further preferred solution, the inner core has a cylindrical structure, and an end of the inner core away from the sealing component is provided with a handle. The inner core has a cylindrical structure, thereby facilitating the arrangement of elastic components on its side wall, and the end of the inner core away from the sealing component is provided with a handle, thereby not only facilitating pressing the sealing device into the component to be sealed via the handle, but also facilitating pulling out the sealing device via the handle.

In a further preferred solution, the handle and the inner core are coaxially and integrally provided, and an outer diameter of a circumscribed circle of the handle is larger than an outer diameter of the inner core. The handle and the inner core are coaxially and integrally provided, thereby facilitating controlling the traveling direction of the sealing device via the handle, the outer diameter of the circumscribed circle of the handle is larger than the outer diameter of the inner core, such that the contact area between the hand and the handle can be increased, thereby making the operation more convenient.

In a further preferred solution, the sealing component is coaxially and integrally provided at an end of the inner core, and an outer diameter of the sealing component is uniformly reduced in a direction away from the inner core. The sealing component has a conical structure, which facilitates the insertion of the sealing component into the opening of the component to be sealed, such that the opening can be blocked effectively.

This invention also provides a sealing system comprising the sealing device, the sealing system also comprises a sealed piece and a position limiting device that allows the sealing device to be inserted or pulled out; a liquid passing port a is formed on the sealed piece, the position limiting device is cooperatively provided on an outer side of the sealed piece;
wherein when the sealing device is inserted into an interior of the position limiting device, the sealing component and the liquid passing port a are sealed with each other, and cantilever pieces and inner walls of the position limiting device are squeezed against each other.

In this solution, the position limiting device is arranged on the sealed piece and corresponds to the liquid passing port a of the sealed piece, when the sealing device is inserted into the interior of the position limiting device, the sealing component and the liquid passing port a are sealed with each other, that is, the end of the sealing component will be inserted into the liquid passing port a, and at this time, since the cantilever pieces and the inner walls of the position limiting device are squeezed against each other, the sealing device can be fixed within the position limiting device, thereby preventing the sealing component from being detached from the liquid passing port a, improving the stability of the sealing effect.

In a further preferred solution, the position limiting device has a cylindrical structure or a rectangular structure, and when the sealing device is inserted into the interior of the position limiting device, the fixing components are in close contact with the inner walls of the position limiting device. The position limiting device has a cylindrical structure or a rectangular structure, which is simple in structure, easy to manufacture, and facilitates the insertion of the sealing device, when the sealing device is inserted into the interior of the position limiting device, the elastic components can abut against the two symmetrical inner walls of the position limiting device, and the fixing components are in close contact with the inner walls of the position limiting device, the sealing effect is good.

In a further preferred solution, a bottom of the position limiting device is arranged to be in close contact with an outer wall of the sealed piece, and a through hole which cooperates and communicates with the liquid passing port a is formed at the bottom of the position limiting device.

When the sealing device is inserted into the interior of the position limiting device, the sealing component can block the through hole and the liquid passing port a, thereby achieving the purpose of sealing; the position limiting device can also be used as a liquid feeding groove for certain sealed pieces.

In a further preferred solution, a liquid passing port b is also formed in the sealed piece, the liquid passing port b and the liquid passing port a are connected inside the sealed piece via a bent liquid channel;
wherein a pair of position limiting devices is provided on the sealed piece, and the pair of position limiting devices is provided in cooperation with the liquid passing port b and the liquid passing port a respectively.

By means of two sets of sealing devices, the liquid passing port a and the liquid passing port b can be sealed respectively, and the liquid inside the sealed piece can flow via the liquid channel, the bents in the liquid channel can increase its length, thereby increasing its capacity.

In a further preferred solution, an inner diameter of an inscribed circle of the inner walls of the position limiting device is 5%-10% smaller than an outer diameter of a circumscribed circle of the cantilever piece. When in use, the cantilever piece is directly inserted into the cavity structure of the component to be sealed, so that the cantilever piece or the connecting piece is compressed in a direction perpendicular to the inner core, a compression amount of 5%-10% is easy to operate and relatively labor-saving.

In a further preferred solution, the position limiting device is removably connected with the outer side of the sealed piece. It is easy to replace and repair, and the position limiting device with a corresponding size can be selected according to the sizes of the sealing device and the sealed piece to facilitate installation.

In a further preferred solution, when the sealing component is fitted with the liquid passing port a in a sealed manner, a topmost end of a connecting piece is higher than a top rim of the position limiting device. When the sealing component is fitted with the liquid passing port a in a sealed manner, the topmost end of the connecting piece exceeds the edge of the position limiting device, and at this time, the sealing device can not only ensure the sealing effect, but also be easily pulled out later.

In a further preferred solution, when the sealing component is fitted with the liquid passing port a in a sealed manner, a bottom of the connecting piece is lower than the top rim of the position limiting device. When the sealing component is fitted with the liquid passing port a in a sealed manner, a part of the structure of the connecting piece will be inserted into the position limiting device, which can not only prevent the sealing device from being easily pulled out as a result of being inserted too shallowly, but also prevent the sealing device from having difficulty to be pulled out as a result of being inserted too deep.

In a further preferred solution, the sealed piece is a microfluidic device, and a bottom of the position limiting device has a conical cavity structure, and a cone top of the conical cavity structure is in communication with a liquid passing port a of the microfluidic device. The aperture diameter of the liquid passing port a of the microfluidic device is very small, and the position limiting device is used as a liquid feeding groove of the microfluidic device, thereby facilitating adding liquid to the microfluidic device.

Compared with the prior art, this invention has the following beneficial effects:
the sealing device provided by this invention comprises an inner core and at least two elastic components spaced apart on the side wall of the inner core, after the sealing device is inserted into a component to be sealed (such as a microfluidic device), the sealing component provided at an end of the inner core will block the opening of the component to be sealed, and at this time, the gas between the sealing device and the component to be sealed can be smoothly discharged from the gap between the two elastic components, thereby preventing the gas from entering a liquid channel inside the component to be sealed. An end of the inner core is provided with a sealing component, after the sealing device is inserted into the component to be sealed, the sealing component can block the opening of the component to be sealed. Since the elastic components can be fully or partially elastically deformed in a direction toward the inner core, when the sealing device is inserted into a cavity structure (i.e. the position limiting device in the sealing system provided by this invention), whose size is smaller than the outer contour size of the sealing device, the elastic components can be deformed, and the elastic components and the inner wall of the cavity structure are squeezed against each other, which forms a large static friction force, thereby effectively preventing the sealing device from being slipped out of the cavity structure, i.e., preventing the sealing component from being detached from the opening, ensuring the sealing effect.

When using the sealing device in this solution, it is only necessary to hold the handle, and align the sealing device with the opening portion of the component to be sealed (such as a microfluidic device), and then directly insert the sealing device into the position limiting device and seal the opening; when disassembling the sealing device in this solution, it is sufficient to directly pull out the sealing device. The sealing device is easy to operate and is not easy to detach, has good the sealing performance and strong practicality.

### BRIEF DESCRIPTION OF DRAWINGS

To illustrate the technical solutions in the specific embodiments of this invention or in the prior art more clearly, the drawings required for describing the specific embodiments or the prior art will be briefly described below. Apparently, the drawings described below merely relates to some embodiments of this invention, and ordinary persons skilled in the art may derive other drawings from these drawings without creative efforts.
Fig. 1a is a specific structural schematic view of a sealing device provided by this invention;
Fig. 1b is another specific structural schematic view of a sealing device provided by this invention;
Fig. 2 is yet another specific structural schematic view of a sealing device provided by this invention;
Fig. 3 is a specific front view of a sealing device provided by this invention;
Fig. 4 is a structural schematic view of a sealing system provided by this invention;
Fig. 5 is a schematic cross-sectional view taken along line A-A in Fig. 3;
Fig. 6 is a structural schematic view showing a sealing device provided by this invention being inserted into a position limiting device;
Fig. 7 is a structural schematic view of a sealed piece provided by this invention;
Fig. 8 is another structural schematic view of a sealing system provided by this invention;
Fig. 9 is a schematic cross-sectional view taken along line B-B in Fig. 8;
Fig. 10 is a structural schematic view of a liquid channel provided by this invention.

In the above drawings, the components represented by each reference numeral are listed as follows:
sealing device-100; inner core-101; elastic component-102; rigid piece-112; elastic strip-122; connecting piece-1021; cantilever piece-1022; fixing component-103; sealing component-104; handle-105; position limiting device-201; through hole-202; sealed piece-301; liquid passing port a-302; liquid passing port b-303; liquid channel-3 04.

### DESCRIPTION OF EMBODIMENTS

In order to make the above and other features and advantages of this invention clearer, this invention is further described below in conjunction with the drawings. It should be understood that the specific embodiments given herein are for the purpose of explanation to those skilled in the art, only illustrative but not restrictive.

In the description of this invention, it is to be understood that orientation or position relationships indicated by terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" or the like are orientation or position relationships shown on the basis of the drawings, and the orientation or position relationships are not intended to indicate or imply that the referred device or element must be at the specific orientation or be constructed and operated at the specific orientation, but only intended for the convenience of describing this invention and simplifying the description, and thus such orientation or position relationships may not be understood as limits to this invention.

In addition, terms "first" and "second" are only adopted for the objective of description, and cannot be understood to indicate or imply relative importance of the indicated technical feature or implicitly indicate the number of the indicated technical feature. Therefore, a feature limited by "first" or "second" may explicitly or implicitly comprise at least one such feature. In the description of this invention, unless otherwise explicitly and specifically limited, "a plurality of' means at least two, such as two, three, etc.

In this invention, unless otherwise explicitly specified and limited, terms such as "mount", "connect", "connection" and "fix" should be broadly understood, for example, they may refer to a fixed connection, and may also refer to a detachable connection or being integrated; they may refer to a mechanical connection or may also refer to an electrical connection; they may refer to a direct connection, or may also refer to an indirect connection through an intermediate; they may refer to communication inside two elements or interaction relationship of two elements, unless otherwise explicitly limited. For ordinary persons skilled in the art, the specific meanings of the above terms in this invention may be understood according to actual conditions.

In this invention, unless otherwise explicitly specified and limited, the expression of a first feature being "over" or "under" a second feature may mean a direct contact between the first and second features, or an indirect contact between the first and second features through an intermediate. Moreover, the expression of a first feature being "over", "above" or "on top of' a second feature may mean that the first feature is directly above or obliquely above the second feature, or only represents that the horizontal height of the first feature is larger than that of the second feature. The expression of a first feature being "under", "below" or "underneath" a second feature may mean that the first feature is directly below or obliquely below the second feature, or only represents that the horizontal height of the first feature is smaller than that of the second feature.

In the description of this specification, the description with reference to the terms "one embodiment", "some embodiments", "example", "specific example", or "some examples" or the like means that a specific feature, structure, material, or characteristic described in conjunction with the embodiment or example is comprised in at least one embodiment or example of this invention. In this specification, exemplary description of the above terms is not necessarily referring to the same embodiment or example. Furthermore, the described specific features, structures, materials, or characteristics may be combined in a suitable manner in any one or more embodiments or examples. In addition, those skilled in the art may combine and incorporate different embodiments/examples or features of different embodiments/examples described in this specification unless they are inconsistent with each other.

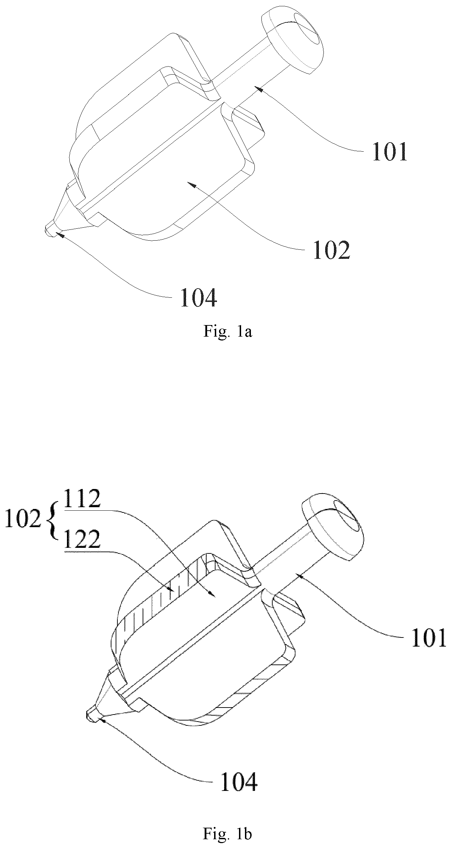

As shown in Fig. 1a, this invention provides a sealing device 100, which comprises an inner core 101 and at least two elastic components 102 provided on a side wall of the inner core 101, and there is a gap between two adjacent elastic components 102;
the elastic components 102 can be fully or partially elastically deformed in a direction toward the inner core 101;
an end of the inner core 101 is provided with a sealing component 104.

The sealing device 100 in this solution comprises an inner core 101 and at least two elastic components 102 provided on the side wall of the inner core 101, and there is a gap between two adjacent elastic components 102, the arrangement of the two elastic components 102 can improve the structural balance of the sealing device 100 to a certain extent. After the sealing device 100 is inserted into a component to be sealed, the gas between the sealing device 100 and the component to be sealed can be smoothly discharged from the gap, thereby preventing the gas from entering into a liquid channel inside the component to be sealed. After the sealing device 100 is inserted into the component to be sealed, the sealing component 104 can block the opening of the component to be sealed. The shape of the sealing component 104 will not be described in detail here, it may be made of elastic material and can be deformed to adapt to openings with different shapes. When the sealing device 100 is inserted into a cavity structure, the size of which is smaller than the outer contour size of the sealing device 100, the elastic components 102 can be deformed, and the elastic components 102 and the inner wall of the cavity structure are squeezed against each other, which forms a large static friction force, thereby effectively preventing the sealing device 100 from being slipped out of the cavity structure, i.e., preventing the sealing component 104 from being detached from the opening, ensuring the sealing effect.

It should be noted that, in this solution, an angle between each two elastic components 102 is not limited, but the angle should at least be able to allow gas to be discharged normally. The shape of the elastic component 102 and the parts of the elastic component 102 that can be deformed are not specifically limited in this solution, the elastic component 102 can be elastically deformed as a whole, or only be deformed at edges or other partial areas, as long as its elastic deformation can make the edges of the elastic component 102 move in the direction toward the inner core 101.

Further, the side wall of the inner core 101 is symmetrically provided with at least one pair of elastic components 102; the symmetrically arranged elastic components 102 can abut against the inner wall of the cavity structure into which it is inserted as symmetrically as possible during elastic recovery, thereby making the connection between the sealing device 100 and the component to be sealed tighter.

In order to ensure the use effect and structural symmetry, each pair of elastic components 102 in this solution is arranged coplanarly; in another embodiment, each pair of elastic components 102 is not arranged coplanarly, which can also achieve a good sealing effect. It should be understood that any size of angle between each pair of elastic components 102 falls within the protection scope of this invention.

Further, the side wall of the inner core 101 is also provided with at least one pair of fixing components 103; the fixing components 103 do not undergo deformation during use, and they mainly serve to provide a certain support and balance and to protect the structure of the sealing device 100 when the elastic components 102 are squeezed.

In specific applications, one fixing component 103, one pair or multiple pairs of fixing components 103 may be provided, and in this solution, the number of fixed components 103 is not specifically limited. When one or more pairs of fixing components 103 are provided, each pair of fixing components 103 may be arranged coplanarly or may not be arranged coplanarly; in other embodiments, the fixing components 103 may also be arranged coplanarly with the elastic components 102, or at any angle to the elastic components 102. Further, each pair of fixing components 103 is arranged coplanarly, and each pair of elastic components 102 is arranged coplanarly; each pair of fixing components 103 and each pair of elastic components 102 both are arranged coplanarly, thereby not only ensuring the stability and aesthetics of the overall structure of the sealing component 104, but also making the operation more convenient.

In another embodiment, the fixing components 103 and the elastic components 102 may also be arranged coplanarly, when in use, the elastic components 102 can be deformed in a direction towards the axis of the inner core 101, which can not only save labor, but also avoid damage to the elastic components 102 due to frequent lateral force application.

Further, as shown in Fig. 1b, the elastic component 102 comprises a rigid piece 112 and an elastic strip 122; one side of the rigid piece 112 is connected with the side wall of the inner core, and the other side is connected to the elastic strip 122. The elastic strip 122 can be elastically deformed when being inserted into the cavity structure, thereby increasing the static friction force between the elastic strip 122 and the inner wall of the cavity structure, making the connection between the sealing device 100 and the component to be sealed tighter.

It should be noted that the elastic strip 122 can be fixedly or removably connected with the rigid piece 112. In another preferred embodiment, the elastic strip 122 is an elastomer, such as rubber, etc., covering the outer edge of the rigid piece 112.

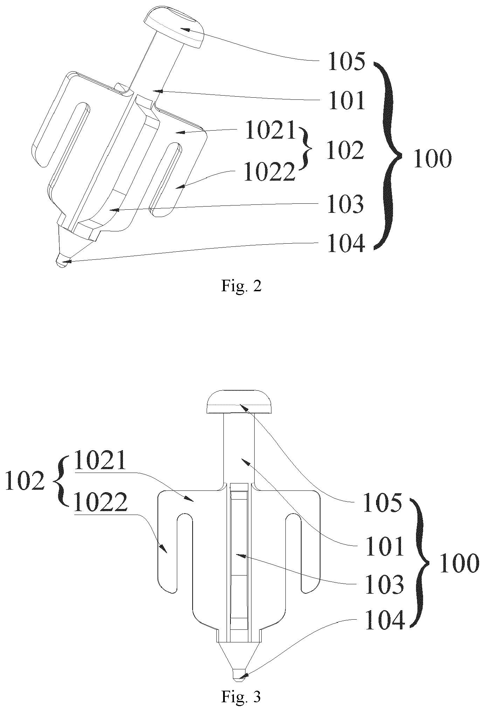

Further, as shown in Figs. 2 and 3, the elastic component 102 at least comprises a connecting piece 1021 and a cantilever piece 1022, one end of the connecting piece 1021 is provided on the side wall of the inner core 101, and the other end is provided with the cantilever piece 1022, and there is a gap between the cantilever piece 1022 and the inner core 101;
wherein the cantilever piece 1022 and/or the connecting piece 1021 can be elastically deformed in a direction toward the inner core 101.

The sealing device 100 comprises an inner core 101 and elastic components 102, the sealing effect of the sealing device 100 on the sealed component is achieved via the deformation and recovery process of the elastic components 102. The elastic component 102 at least comprises a connecting piece 1021 and a cantilever piece 1022, one end of the connecting piece 1021 is connected with the side wall of the inner core 101, and the other end is connected with the cantilever piece 1022, there is a gap between the cantilever piece 1022 and the inner core 101.

At least one of the cantilever piece 1022 and the connecting piece 1021 can be elastically deformed under the action of external force, that is, the cantilever piece 1022 can be deflected in a direction toward the gap under the action of external force, and after the external force is removed, the cantilever piece 1022 will return to its original position. When the sealing device 100 is inserted into the cavity structure, where the shape of the cavity structure is not specifically limited, the sealing component 104 can block the opening portion of the component to be sealed, and the cantilever piece 1022 or the connecting piece 1021 can be elastically deformed as a result of being squeezed by the inner wall of the cavity structure, and thus the cantilever member 1022 is deflected in a direction toward the gap. At the same time, the outer wall of the cantilever piece 1022 exerts a reaction force on the inner wall of the cavity structure, thereby increasing the friction force between the cantilever piece 1022 and the inner wall of the cavity structure, so that the sealing device 100 seals the opening portion more firmly and the sealing device 100 is not easy to detach.

As shown in Fig. 2, in order to improve the firmness of the connection between the connecting piece 1021 and the inner core 101, the connecting piece 1021 is set as an L-shaped structure, the longer side of the L-shaped structure is directly connected with the side wall of the inner core 101, and thus the connecting surface is larger and the connection is firmer, the other end of the connecting piece 1021 is connected with the cantilever piece 1022, in this way, the cantilever piece 1022 and part of the connecting piece 1021 are located at two sides of the gap, this part of the connecting piece 1021 can also provide certain support and protection for the cantilever piece 1022 during the deformation of the cantilever piece 1022.

As shown in Fig. 2, in a preferred embodiment, in order to facilitate better insertion and pullout, during the specific implementation of this invention, the bottom of the outer side of the cantilever piece 1022 is provided with an inclined surface (or arc surface), when the cantilever piece 1022 needs to be inserted into the cavity structure, the inclined surface (or arc surface) will first contact the inner wall at the top end of the cavity structure, and at this time, the cantilever piece 1022 can be inserted into the cavity structure by simply pressing the handle 105. Likewise, the arrangement of the inclined surface (or arc surface) also makes the the pullout process of the cantilever piece 1022 easier. In another preferred embodiment, the bottom of the longer side of the L-shaped structure of the connecting piece 1021 is also set as a structure with an inclined surface, and the inclination of its inclined surface is substantially the same as that of the inclined surface of the cantilever piece 1022.

Likewise, in other preferred embodiments, the bottom end of the fixing component 103 may also be provided with an inclined surface similar to that at the bottom end of the cantilever piece 1022.

Further, in directions perpendicular to the inner core 101, the length size of the connecting piece 1021 is greater than the length size of the fixing component 103; when in use, the connecting piece 1021 needs to be compressed so that it can be smoothly inserted into the cavity structure of the component to be sealed, since the fixing component 103 cannot be deformed, so its size should be smaller than that of the connecting piece 1021.

It should be understood that this is mainly for the case where the cavity structure is a cylinder or a regular polygonal cylinder, in this case, the requirement that the size of the fixing component 103 is smaller than that of the connecting component 1021 needs to be met. If the cavity structure is in other shapes, the sizes of the connecting piece 1021 and the fixing component 103 can be changed as needed, as long as the sealing device 100 can be smoothly inserted into the cavity structure and the sealing device 100 and the inner wall of the cavity structure are squeezed against each other.

In another preferred embodiment, the connecting pieces 1021 corresponding to the elastic components 102 can also be arranged asymmetrically about the inner core 101, specifically, there is a height difference between the connecting pieces 1021 on the side wall of the inner core 101, which leads to a height difference between the cantilever pieces 1022 correspondingly connected to the connecting pieces 1021, when the sealing device 100 is inserted into the component to be sealed, the lower cantilever piece 1022 takes effect first, this arrangement can meet the needs for components to be sealed with different depths and provides good sealing performance.

Further, in a non-stressed state, the cantilever piece 1022 and the inner core 101 are arranged in parallel. The cantilever piece 1022 and the inner core 101 are arranged in parallel, thereby not only facilitating vertically inserting into the cavity structure of the component to be sealed, but also facilitating pullout.

When the cantilever piece 1022 and the inner core 101 are not parallel, if the inner wall of the cavity structure of the component to be sealed is not flat, such as the component to be sealed is a cylindrical structure, it is difficult to insert the cantilever piece 1022 and it is also inconvenient to pull out the cantilever piece 1022. Moreover, when being inserted obliquely, the cantilever piece 1022 will be subject to lateral pressure, which will affect the structural stability of the cantilever piece 1022 and reduce its service life.

Further, the cantilever piece 1022 extends toward the side where the sealing component 104 is located; the extended end of the cantilever piece 1022 is directly inserted into the interior of the component to be sealed when in use, which not only facilitates insertion, but also facilitates extending the service life of the cantilever piece 1022.

It should be understood that both of the following two situations also fall within the acceptable protection scope of this invention: the cantilever piece 1022 extends toward the side where the handle 105 is located; or, a part of the cantilever piece 1022 extends toward the side where the sealing component 104 is located, and the other part of the cantilever piece 1022 extends toward the side where the handle 105 is located.

Further, the connecting piece 1021 is fixedly connected with the side wall of the inner core 101, the cantilever piece 1022 and the connecting piece 1021 are integrally provided, and the cantilever piece 1022 can be elastically deformed in a direction toward the inner core 101. When in use, the connecting piece 1021 is not deformed, and a stable sealing effect can be achieved only by the deformation of the cantilever piece 1022.

In a further preferred solution, the connecting piece 1021 is fixedly connected with the side wall of the inner core 101, the cantilever piece 1022 and the connecting piece 1021 are integrally provided, and the connecting piece 1021 can be elastically deformed in a direction toward the inner core 101. When in use, the cantilever piece 1022 is not deformed, but the connecting piece 1021 is compressed, so that the cantilever piece 1022 moves in a direction toward the gap, then the cantilever piece 1022 is inserted into the component to be sealed; after being released, the cantilever piece 1022 can squeeze the inner wall of the component to be sealed due to rebound, thereby increasing the friction force between the cantilever piece 1022 and the inner wall to avoid slippage.

Further, the connecting piece 1021 is fixedly connected with the side wall of the inner core 101, the cantilever piece 1022 and the connecting piece 1021 are integrally provided, and the connecting piece 1021 and the cantilever piece 1022 can be elastically deformed in a direction toward the inner core 101 simultaneously; a tight sealing effect is achieved based on the joint action of the connecting piece 1021 and the cantilever piece 1022, during sealing, the connecting piece 1021 and the cantilever piece 1022 are elastically deformed simultaneously.

Further, the cantilever piece 1022 is made of elastic material; and/or the connecting piece 1021 is made of elastic material; in this solution, at least one of the cantilever piece 1022 and the connecting piece 1021 is made of elastic material, since there are many elastic materials in the prior art, such as rubber, etc., and the output is large, the cost is low.

In this solution, elastic devices, such as springs, etc., can also be employed as the main body of the elastic component 102.

Further, the inner core 101 has a cylindrical structure, and an end of the inner core 101 away from the sealing component 104 is provided with a handle 105. The inner core 101 has a cylindrical structure, thereby facilitating the arrangement of elastic components 102 on its side wall, and the end of the inner core 101 away from the sealing component 104 is provided with a handle 105, thereby not only facilitating pressing the sealing device 100 into the component to be sealed via the handle 105, but also facilitating pulling out the sealing device 100 via the handle 105.

The shape of the handle 105 is not limited herein, and may be round, square or flower-shaped, etc., as long as it is suitable for comfortable use by hand.

Further, the handle 105 and the inner core 101 are coaxially and integrally provided, and the outer diameter of the circumscribed circle of the handle 105 is larger than the outer diameter of the inner core 101. The handle 105 and the inner core 101 are coaxially and integrally provided, thereby facilitating controlling the traveling direction of the sealing device 100 via the handle 105, when in use, it is sufficient to apply a force in a vertical direction, which can not only save labor, but also can avoid damage to the device; the outer diameter of the circumscribed circle of the handle 105 is larger than the outer diameter of the inner core 101, such that the contact area between the hand and the handle 105 can be increased, thereby making the operation more convenient. To improve hand comfort, the edge of the handle 105 can be set in an arc shape.

Further, the sealing component 104 is coaxially and integrally provided at an end of the inner core 101, and the outer diameter of the sealing component 104 is uniformly reduced in a direction away from the inner core 101. The sealing component 104 has a conical structure, which facilitates the insertion of the sealing component 104 into the opening of the component to be sealed, such that the opening can be blocked effectively.

It should be noted that the specific shape of the sealing component 104 is not limited in this invention, in another embodiment, in order to further improve the blocking effect, the sealing component 104 is made of elastic material so as to adapt to different shapes of openings.

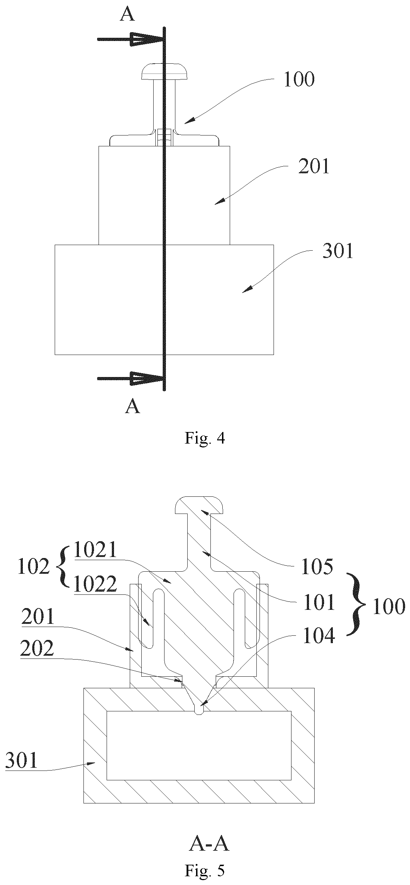

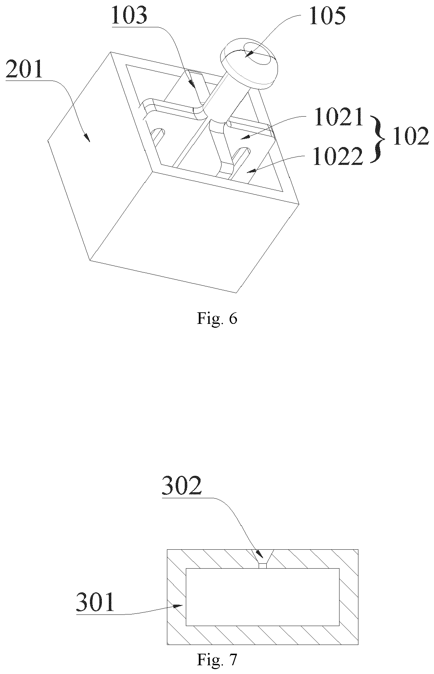

As shown in Figs. 4-7, this invention also provides a sealing system comprising the sealing device 100, the sealing system also comprises a sealed piece 301 and a position limiting device 201 that allows the sealing device 100 to be inserted or pulled out; a liquid passing port a 302 is formed on the sealed piece 301, the position limiting device 201 is cooperatively provided on the outer side of the sealed piece 301;
wherein when the sealing device 100 is inserted into the interior of the position limiting device 201, the sealing component 104 and the liquid passing port a 302 are sealed with each other, and the cantilever pieces 1022 and the inner walls of the position limiting device 201 are squeezed against each other.

In this solution, the sealing device 100 can not only be applied for simple liquid storage sealing, but also be applied to microfluidic devices, the position limiting device 201 is provided on the sealed piece 301 and corresponds to the liquid passing port a 302 of the sealed piece 301, when the sealing device 100 is inserted into the position limiting device 201, the sealing component 104 and the liquid passing port a 302 are sealed with each other, that is, the end of the sealing component 104 will be inserted into the liquid passing port a 302, and at this time, since the cantilever pieces 1022 and the inner walls of the position limiting device 201 are squeezed against each other, a large friction force is generated between the cantilever pieces 1022 and the inner walls of the position limiting device 201, when the cantilever pieces 1022 slide outward, a certain resistance would be generated, so that the sealing device 100 can be fixed within the position limiting device 201, thereby preventing the sealing component 104 from being detached from the liquid passing port a 302, improving the stability of the sealing effect.

Further, the position limiting device 201 has a cylindrical structure or a rectangular structure, and when the sealing device 100 is inserted into the interior of the position limiting device 201, the fixing components 103 are in close contact with the inner walls of the position limiting device 201. When the sealing device 100 is inserted into the interior of the position limiting device 201, the elastic components 102 can abut against the two symmetrical inner walls of the position limiting device 201 and thus a friction force is generated, to prevent the sealing component 104 from being detached from the position limiting device 201, and at this time, the fixing components 103 are in close contact with the inner walls of the position limiting device 201, the sealing effect is good.

It should be understood that the structure of the position limiting device 201 is not specifically limited in this solution, the cylindrical structure or the rectangular structure is only a preferred embodiment, and the fixing components 103 only need to be able to be smoothly inserted into the interior of the position limiting device 201, it is a preferred solution that the fixing components 103 are in close contact with the inner walls of the position limiting device 201.

Further, the bottom of the position limiting device 201 is arranged to be in close contact with the outer wall of the sealed piece 301, and a through hole 202 which cooperates and communicates with the liquid passing port a 302 is formed at the bottom of the position limiting device 201.

The bottom of the position limiting device 201 is in close contact with the outer wall of the sealed piece 301, and surrounds the outer side of the edge of the liquid passing port a 302, when the sealing device 100 is inserted into the interior of the position limiting device 201, the sealing component 104 can pass through the through hole 202 at the bottom of the position limiting device 201 and block the liquid passing port a 302, thereby achieving the purpose of sealing. The position limiting device 201 can also be used as a liquid feeding groove for certain sealed pieces 301, for example devices with a small liquid passing port a 302, such as microfluidic devices, etc.

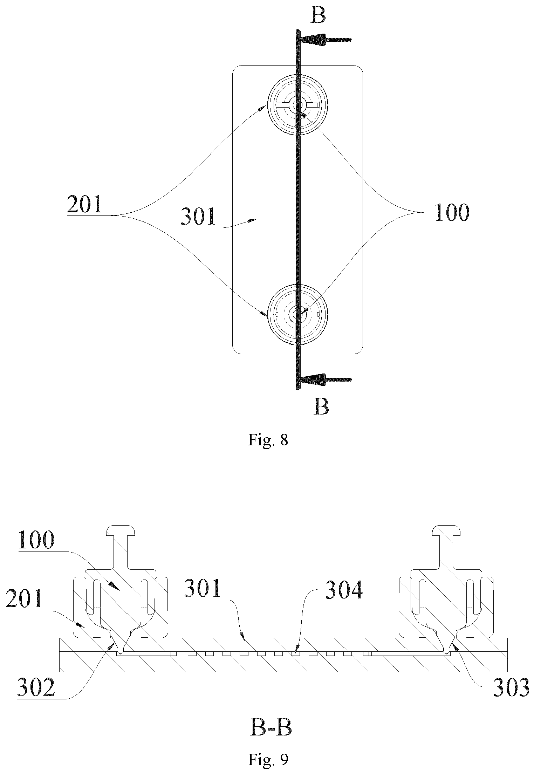

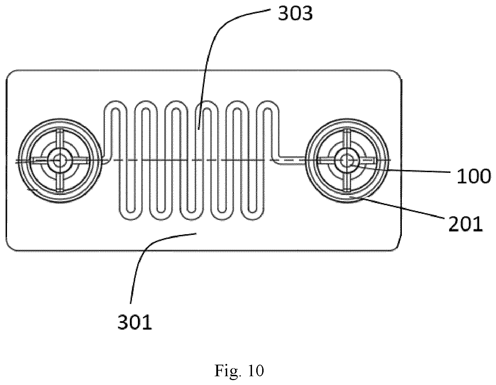

As shown in Figs. 8-10, further, a liquid passing port b 303 is also formed in the sealed piece 301, the liquid passing port b 303 and the liquid passing port a 302 are connected inside the sealed piece 301 via a bent liquid channel 304;
wherein a pair of position limiting devices 201 is provided on the sealed piece 301, and the pair of position limiting devices 201 is provided in cooperation with the liquid passing port b 303 and the liquid passing port a 302 respectively.

The liquid passing port a 302 and the liquid passing port b 303 in this solution are named differently only for convenience of description, in actual use, the uses of the liquid passing port a 302 and the liquid passing port b 303 can be replaced by each other. The position limiting devices 201 are provided respectively and correspondingly on the liquid passing port a 302 and the liquid passing port b 303, and used in conjunction with the sealing device 100, the liquid passing port a 302 and the liquid passing port b 303 can be effectively blocked and it is easy to operate. The liquid passing port b 303 and the liquid passing port a 302 are in fluid communication with each other via the liquid channel 304 inside the sealed piece 301, the bents in the liquid channel 304 can increase its length and thereby increase its capacity, the specific bending method of the liquid channel 304 is not limited herein, shapes, such as serpentine, spiral, etc., are all understandable implementations.

Further, the inner diameter of the inscribed circle of the inner walls of the position limiting device 201 is 5%-10% smaller than the outer diameter of the circumscribed circle of the cantilever piece 1022. When in use, the handle 105 is held, the end of the cantilever piece 1022 is first inserted into the position limiting device 201, and then a force is applied vertically, so that the cantilever piece 1022 or the connecting piece 1021 is compressed in a direction perpendicular to the inner core 101, until the cantilever piece 1022 can be inserted into the position limiting device 201.

It should be understood that the values 5%-10% in this solution only relates to a preferred embodiment, in other embodiments, the sizes of the fixing component 103, the cantilever piece 1022 and the connecting component 1021 can be changed according to the structure of the position limiting device 201.

Further, the position limiting device 201 is removably connected with the outer side of the sealed piece 301. The position limiting device 201 with a corresponding size can be selected according to the sizes of the sealing device 100 and the component to be sealed to facilitate installation and replacement.

Further, when the sealing component 104 is fitted with the liquid passing port a 302 in a sealed manner, the topmost end of the connecting piece 1021 is higher than the top rim of the position limiting device 201. That is, when the sealing component 104 is fitted with the liquid passing port a 302 in a sealed manner, the topmost end of the connecting piece 1021 exceeds the edge of the position limiting device 201, if the sealing device 100 is inserted too deep, it will be difficult to pull out the sealing device 100 and the sealing device 100 will be easily damaged.

Further, when the sealing component 104 is fitted with the liquid passing port a 302 in a sealed manner, the bottom of the connecting piece 1021 is lower than the top rim of the position limiting device 201. That is, when the sealing component 104 is fitted with the liquid passing port a 302 in a sealed manner, the lower half part of the connecting piece 1021 will be partly inserted into the position limiting device 201, and at this time, the sealing device 100 can not only ensure a certain blocking effect, but also be easily pulled out.

Further, the sealed piece 301 is a microfluidic device, and the bottom of the position limiting device 201 has a conical cavity structure, and the cone top of the conical cavity structure is in communication with the liquid passing port a 302 of the microfluidic device. The liquid passing port a 302 of the microfluidic device often needs to be temporarily sealed, and the aperture diameter of the liquid passing port a 302 is very small, the bottom of the position limiting device 201 is set as a conical cavity structure, such that not only the position of the sealing device 100 can be limited, but also the conical cavity structure can serve as a liquid feeding groove of the microfluidic device, thereby facilitating the liquid within the position limiting device 201 to fully enter the microfluidic device.

The microfluidic device in this solution relates to existing technology, and its specific structure will not be described in detail herein.

When using the sealing device 100 provided in this invention, it is only necessary to hold the handle 105 and directly insert the cantilever piece 1022 into the cavity structure, and then release the hand when the sealing device 100 has blocked the opening portion of the sealed piece 104 (such as a microfluidic device); when disassembling the sealing device 100 provided in this invention, it is sufficient to directly pull out the sealing device 100. The sealing device 100 is easy to operate and is not easy to detach, has good sealing performance and strong practicality.

Although the embodiments of this invention have been shown and described above, it can be understood that the above embodiments are illustrative and should not be construed as limitations of this invention, and ordinary persons skilled in the art can make changes, modifications, substitutions and variations to the above embodiments without departing from scope of this invention.

## Claims

1. A sealing device, **characterized in that**, the sealing device comprises an inner core and at least two elastic components spaced apart on a side wall of the inner core; the elastic components can be fully or partially elastically deformed in a direction toward the inner core;
an end of the inner core is provided with a sealing component.

2. The sealing device according to claim 1, **characterized in that**, the side wall of the inner core is symmetrically provided with at least one pair of the elastic components.

3. The sealing device according to claim 2, **characterized in that**, the side wall of the inner core is also provided with at least one pair of fixing components.

4. The sealing device according to claim 3, **characterized in that**,each pair of the fixing components is arranged coplanarly, and each pair of the elastic components is arranged coplanarly.

5. The sealing device according to any one of claims 1-4, **characterized in that**, the elastic component comprises a rigid piece and an elastic strip;
one side of the rigid piece is connected with the side wall of the inner core, and the other side is connected to the elastic strip.

6. The sealing device according to any one of claims 1-4, **characterized in that**, the elastic component at least comprises a connecting piece and a cantilever piece, one end of the connecting piece is provided on the side wall of the inner core, and the other end is provided with the cantilever piece, and there is a gap between the cantilever piece and the inner core;
wherein the cantilever piece and/or the connecting piece can be elastically deformed in the direction toward the inner core.

7. The sealing device according to claim 6, **characterized in that**, in directions perpendicular to the inner core, a length size of the connecting piece is greater than a length size of the fixing component.

8. The sealing device according to claim 6, **characterized in that**, the pair of connecting pieces corresponding to the elastic components are arranged asymmetrically about the inner core.

9. The sealing device according to claim 8, **characterized in that**, in a non-stressed state, the cantilever piece and the inner core are arranged in parallel.

10. The sealing device according to claim 9, **characterized in that**, the cantilever piece extends toward a side where the sealing component is located.

11. The sealing device according to claim 10, **characterized in that**, the connecting piece is fixedly connected with the side wall of the inner core, the cantilever piece and the connecting piece are integrally provided, and the cantilever piece can be elastically deformed in the direction toward the inner core.

12. The sealing device according to claim 10, **characterized in that**, the connecting piece is fixedly connected with the side wall of the inner core, the cantilever piece and the connecting piece are integrally provided, and the connecting piece can be elastically deformed in the direction toward the inner core.

13. The sealing device according to claim 10, **characterized in that**, the connecting piece is fixedly connected with the side wall of the inner core, the cantilever piece and the connecting piece are integrally provided, and the connecting piece and the cantilever piece can be elastically deformed in the direction toward the inner core simultaneously.

14. The sealing device according to any one of claims 11-13, **characterized in that**, the cantilever piece is made of elastic material; and/or the connecting piece is made of elastic material.

15. The sealing device according to claim 14, **characterized in that**, the inner core has a cylindrical structure, and an end of the inner core away from the sealing component is provided with a handle.

16. The sealing device according to claim 15, **characterized in that**, the handle and the inner core are coaxially and integrally provided, and an outer diameter of a circumscribed circle of the handle is larger than an outer diameter of the inner core.

17. The sealing device according to claim 16, **characterized in that**, the sealing component is coaxially and integrally provided at an end of the inner core, and an outer diameter of the sealing component is uniformly reduced in a direction away from the inner core.

18. A sealing system comprising the sealing device according to any one of claims 1-17, **characterized in that**, the sealing system also comprises a sealed piece and a position limiting device that allows the sealing device to be inserted or pulled out; a liquid passing port a is formed on the sealed piece, the position limiting device is cooperatively provided on an outer side of the sealed piece;
wherein when the sealing device is inserted into an interior of the position limiting device, the sealing component and the liquid passing port a are sealed with each other, and cantilever pieces and inner walls of the position limiting device are squeezed against each other.

19. The sealing system according to claim 18, **characterized in that**, the position limiting device has a cylindrical structure or a rectangular structure, and when the sealing device is inserted into the interior of the position limiting device, fixing components are in close contact with the inner walls of the position limiting device.

20. The sealing system according to claim 19, **characterized in that**, a bottom of the position limiting device is arranged to be in close contact with an outer wall of the sealed piece, and a through hole which cooperates and communicates with the liquid passing port a is formed at the bottom of the position limiting device.

21. The sealing system according to claim 20, **characterized in that**, a liquid passing port b is also formed in the sealed piece, the liquid passing port b and the liquid passing port a are connected inside the sealed piece via a bent liquid channel;
wherein a pair of position limiting devices is provided on the sealed piece, and the pair of position limiting devices is provided in cooperation with the liquid passing port b and the liquid passing port a respectively.

22. The sealing system according to claim 18, **characterized in that**, an inner diameter of an inscribed circle of the inner walls of the position limiting device is 5%-10% smaller than an outer diameter of a circumscribed circle of the cantilever piece.

23. The sealing system according to claim 18, **characterized in that**, the position limiting device is removably connected with the outer side of the sealed piece.

24. The sealing system according to claim 18, **characterized in that**, when the sealing component is fitted with the liquid passing port a in a sealed manner, a topmost end of a connecting piece is higher than a top rim of the position limiting device.

25. The sealing system according to claim 24, **characterized in that**, when the sealing component is fitted with the liquid passing port a in a sealed manner, a bottom of the connecting piece is lower than the top rim of the position limiting device.

26. The sealing system according to any one of claims 18-25, **characterized in that**, the sealed piece is a microfluidic device, and a bottom of the position limiting device has a conical cavity structure, and a cone top of the conical cavity structure is in communication with the liquid passing port a of the microfluidic device.
